# EUROPEAN PATENT APPLICATION

(11) **EP 2 720 496 A1**
(43) Date of publication of application: **16.04.2014**
(21) Application number: 12796380.9
(22) Date of filing: 06.04.2012
(51) Int. Cl.: H04W 36/26

(54) **CELL RESELECTION METHOD AND DEVICE**

(30) Priority: 10.06.2011 CN 201110155463
(71) Applicant: China Academy of Telecommunications Technology, Haidian District Beijing 100191 (CN)
(72) Inventor: LIANG, Jing, Beijing 100191 (CN); CHEN, Li, Beijing 100191 (CN)
(74) Representative: Nony
(86) International application number: PCT/CN2012/073571
(87) International publication number: WO 2012/167661

(57) **Abstract**

Disclosed are a cell reselection method and device, relating to the technical field of wireless communications, used for improving the continuity of receiving MBMS data by UE. In the present application, a terminal in an idle state acquires the information about a multimedia broadcast multicast service (MBMS) currently being transmitted; the terminal sets the priority of the frequency point where the MBMS transmission is located as the highest priority; and the terminal reselects a cell according to the set priority of the frequency point. By way of applying the present invention, the continuity of receiving MBMS data by the UE can be improved.

## Description

This application claims priority from Chinese Patent Application No. 201110155463.1, filed with the Chinese Patent Office on June 10, 2011 and entitled "Cell reselection method and device", which is hereby incorporated by reference in its entirety.

### Field of the Invention

The present invention relates to the field of wireless communications and particularly to a cell reselection method and device.

### Background of the Invention

Multimedia Broadcast Multicast Service (MBMS) is configured to provide multimedia broadcast and multicast services for users in wireless cells. In a Long Term Evolution (LTE) system, the MBMS can be provided at both a frequency layer specific to the MBMS and a frequency layer shared with non-MBMS service. An LTE cell supporting the MBMS can be an MBMS-specific cell or an MBMS/unicast hybrid cell. The MBMS service can be transmitted over a single cell or can be transmitted over a plurality of cells. Multi-cell transmission of the MBMS needs to have a Multimedia Broadcast multicast service Single Frequency Network (MBSFN) transmission mode supported.

The MBSFN transmission mode refers to synchronous transmission over a plurality of cells at the same frequency at the same time, that is, cells in the same MBSFN area are cells at the same frequency. The use of this transmission mode can save frequency resources and improve a spectrum utilization ratio. It requires the plurality of cells to transmit totally the same content at the same time. As such, a receiver of a User Equipment (UE) can regard the plurality of MBSFN cells as a large cell. Thus the UE will not be subject to inter-cell interference caused by transmission from an adjacent cell but will benefit from superposition of signals from the plurality of MBSFN cells. Both the MBMS-specific cell and the MBMS/unicast hybrid cell can adopt the MBSFN transmission mode. Moreover, if an advanced UE receiver technology is utilized, then the problem of time difference of multi-path propagation can further be addressed to thereby eliminate inter-cell interference. A diversity effect resulting from such multi-cell transmission at the same frequency can further address coverage of a dead zone and other problems to enhance the reliability of reception and improve a coverage ratio.

MBMS multi-cell transmission has the follow technical features: there is synchronous transmission of the MBMS in the MBSFN area; integration of multi-cell MBMS transmission is supported; and the MBSFN area can be configured semi-statically, for example, by an Operation and Maintenance (O&M) entity.

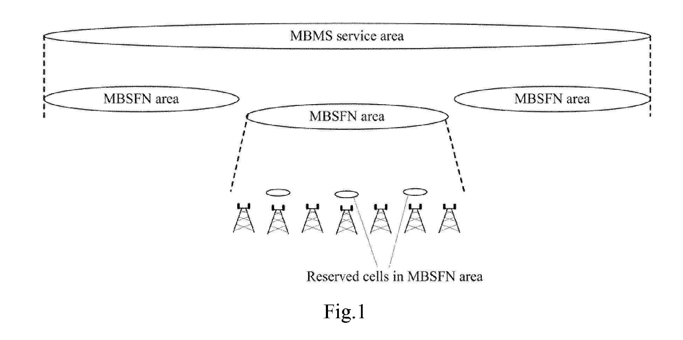

Fig.1 illustrates a relationship between an MBMS service area and MBSFN areas, etc, where the MBMS service area is composed of one or more service identifiers, each of which is mapped to one or more cells.

The MBSFN area is composed of a set of cells in a synchronization area, and these cells perform synchronized MBSNF transmission, and the MBSFN area is planned under a strategy of an operator. Reserved cells in the MBSFN areas also belong to the synchronization area but do not perform MBSNF transmission.

Currently in the LTE Release 11 (Rel-11), only a scenario with transmission at a single frequency is considered.

In the LTE system, when a UE is in idle state, the UE has to perform cell reselection constantly in order to camp on a cell with a higher priority and better channel quality. The network can set priorities of different frequencies for the purpose of controlling a cell where the UE camps, and also the UE will select a cell with the best channel quality at a specific frequency in order to provide better service thereto. The UE reselects a cell to camp on, where the cell shall satisfy a channel quality requirement of cell selection in addition to a cell reselection criterion; otherwise, no reselection can be performed.

The UE in the idle state follows a rule in which a cell is reselected according to priorities of frequencies particularly as follows:

For a frequency with a frequency priority higher than that of a currently camped frequency, the UE shall measure it all the time; and if a cell at a frequency with a higher priority satisfies a channel quality threshold for a period of time, then the UE reselects the cell.

For a frequency with a frequency priority equal to or lower than that of the currently camped frequency, the UE starts measurement when channel quality of a serving cell is below a threshold.

For frequencies with the same priority (including at the same frequency), all of cells are ranked according to channel quality, and if the channel quality of the cell with the strongest channel quality is higher than that of the currently camped cell for a period of time, then the UE reselects the former cell.

For a frequency with a lower priority, if no cell at a frequency with a higher priority or the same priority satisfies the foregoing resection condition, and if the channel quality of the currently camped cell is below a threshold and the channel quality of a cell at the frequency with the lower priority is above a threshold for a period of time, then the UE reselects the cell.

Since measurement for other cells needs to be firstly started before reselection is evaluated, when the priority of the frequency on which the UE camps is the highest priority, the UE will start the measurement for the other cells and further evaluate reselection only if the channel quality of the cell where the UE currently camps is below a threshold, and the UE can reselect another frequency only when there is no appropriate cell at the current frequency.

In the current LTE system, priorities of frequencies are represented as integers 0 to 7, that is, there are eight priorities of frequencies in total, where 0 is the lowest priority, and 7 is the highest priority.

The inventors have found during making of the invention the following technical problem in the prior art:

In the LTE system, the UE in the idle state has to perform cell reselection constantly in order to camp on a cell with a higher priority and better channel quality, but for the UE interested to receive the MBMS service, the continuity of receiving MBMS data by the UE can not be ensured due to constant cell reselection because it is likely for the UE to reselect another cell without the MBMS at any time.

### Summary of the Invention

Embodiments of the invention provide a cell reselection method and device so as to improve the continuity of receiving MBMS data by the UE.

A cell reselection method includes:
obtaining, by a user equipment in idle state, information about a Multimedia Broadcast Multicast Service, MBMS, being transmitted;
setting, by the user equipment, a priority of a frequency on which the MBMS is transmitted as the highest priority; and
performing, by the user equipment, cell reselection according to the set priority of the frequency.

A user equipment includes:
an information obtaining unit configured to obtain information about an Multimedia Broadcast Multicast Service, MBMS, being transmitted in idle state;
a priority setting unit configured to set a priority of a frequency on which the MBMS is transmitted as the highest priority; and
a cell reselecting unit configured to perform cell reselection according to the set priority of the frequency.

In this solution, the user equipment in the idle state sets the priority of the frequency on which the MBMS is transmitted as the highest priority and performs the cell reselection according to the set priority of the frequency after obtaining the information about the MBMS being transmitted. Apparently, the invention can increase the probability that the user equipment reselects a cell at the frequency on which the MBMS is transmitted in the cell reselection procedure by setting the priority of the frequency on which the MBMS is transmitted as the highest priority, so that the user equipment can receive the MBMS data in the cell, thereby improving the continuity of receiving the MBMS data by the UE and enhancing user experience.

### Brief Description of the Drawings

Fig.1 is a schematic diagram of a relationship between an MBMS service area and MBSFN areas in the prior art;
Fig.2 is a schematic flow chart of a method according to an embodiment of the invention; and
Fig.3 is a schematic structural diagram of a device according to an embodiment of the invention.

### Detailed Description of the Embodiments

In order to improve the continuity of receiving MBMS data by a UE, an embodiment of the invention provides a cell reselection method, in which a user equipment in idle state sets the priority of a frequency on which an MBMS is transmitted as the highest priority and subsequently performs cell reselection after obtaining information about the MBMS being transmitted.

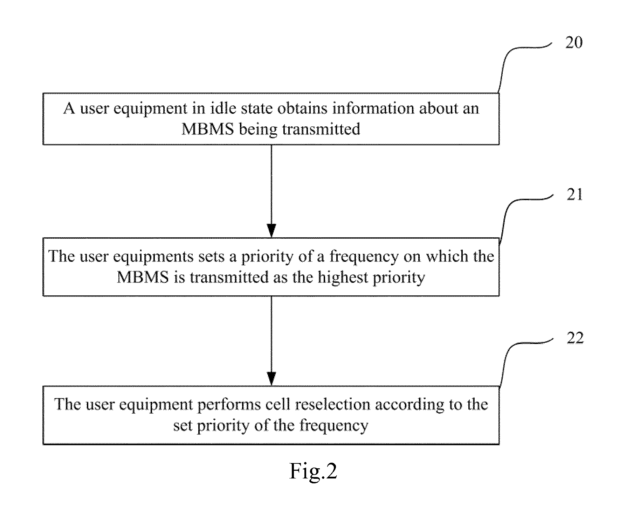

Referring to Fig.2, a cell reselection method according to an embodiment of the invention includes the following steps:

Step 20: A user equipment in idle state obtains information about an MBMS being transmitted.

Step 21: The user equipments sets a priority of a frequency on which the MBMS is transmitted as the highest priority, where the highest priority here refers to a priority above all of priorities of frequencies existing in a system, for example, in the existing LTE system, priorities of frequencies are represented as integers 0 to 7, that is, there are eight priorities of frequencies in total, wherein 0 is the lowest priority and 7 is the highest priority, and then the priority of the frequency on which the MBMS is transmitted can be set as 8.

Step 22: The user equipment performs cell reselection according to the set priority of the frequency under the reselection rule in the background of the invention.

In the step 20, the user equipment in the idle state can obtain the information about the MBMS being transmitted particularly in the following three implementations:

In a first implementation, the UE reads broadcast information about respective adjacent cells, determines from the read broadcast information which adjacent cell has an MBMS being transmitted and obtains relevant information about the MBMS being transmitted, and also can determine the frequency of the adjacent cell with the MBMS being transmitted.

In a second implementation, the UE reads broadcast information about a cell where the UE currently camps, determines from the read broadcast information which adjacent cell has an MBMS being transmitted, and then reads broadcast information about the adjacent cell with the MBMS being transmitted, obtains relevant information about the MBMS being transmitted from the broadcast information, and also can determine the frequency of the adjacent cell with the MBMS being transmitted.

In a third implementation, the UE reads broadcast information about a cell where the UE currently camps, determines from the read broadcast information which adjacent cell has an MBMS being transmitted and obtains relevant information about the MBMS being transmitted, and also can determine the frequency of the adjacent cell with the MBMS being transmitted.

In an embodiment, after the user equipment in the idle state obtains the information about the MBMS being transmitted in the step 20 and before the user equipment sets the priority of the frequency on which the MBMS is transmitted as the highest priority in the step 21, the user equipment can camp on a cell at the frequency on which the MBMS is transmitted directly through a reselection procedure.

Correspondingly, after the user equipment camps on the cell at the frequency on which the MBMS is transmitted and before the user equipment performs the cell reselection according to the set priority of the frequency in the step 22, the user equipment can receive MBMS data in the cell at the frequency on which the MBMS is transmitted.

Preferably, after the user equipment in the idle state obtains the information about the MBMS being transmitted in the step 20 and before the user equipment camps on the cell at the frequency on which the MBMS is transmitted, the user equipment can firstly judge whether the MBMS being transmitted includes an MBMS service interested to receive by itself; and if so, then the user equipment camps on the cell at the frequency on which the MBMS is transmitted; otherwise, the user equipment does not camp on the cell at the frequency on which the MBMS is transmitted.

Here the user equipment can judge whether the MBMS being transmitted includes an MBMS service interested to receive by itself particularly by interacting with an application layer of the user equipment to determine which MBMS has data that the user equipment currently needs to receive, where the MBMS that the user equipment currently needs to receive is an MBMS service which the user equipment is interested to receive.

In another embodiment, after the user equipment in the idle state obtains the information about the MBMS being transmitted in the step 20 and before the user equipment sets the priority of the frequency on which the MBMS is transmitted as the highest priority in the step 21, the user equipment can firstly judge whether the MBMS being transmitted includes an MBMS service interested to receive by itself; and if so, then the user equipment sets the priority of the frequency on which the MBMS is transmitted as the highest priority, otherwise, the user equipment does not set the priority of the frequency on which the MBMS is transmitted as the highest priority.

Here the user equipment can judge whether the MBMS being transmitted includes an MBMS service interested to receive by itself particularly by interacting with an application layer of the user equipment to determine which MBMS has data that the user equipment currently needs to receive, where the MBMS that the user equipment currently needs to receive is an MBMS service which the user equipment is interested to receive.

Correspondingly, after the user equipment performs the cell reselection according to the set priority of the frequency in the step 22, the user equipment receives MBMS data in a cell at the frequency on which the MBMS is transmitted if the user equipment reselects the cell at the frequency on which the MBMS is transmitted.

In the foregoing two embodiments, if the user equipment reselects a cell at another frequency than the frequency on which the MBMS is transmitted in the cell reselection procedure while receiving the MBMS data and currently the user equipment still needs to continue receiving the MBMS data, then the user equipment keeps the priority of the frequency, at which the MBMS is transmitted, as the highest priority and performs a subsequent cell reselection procedure under the existing reselection rule; or

If transmission of the MBMS is terminated or the user equipment does not need to continue receiving the MBMS data, then the user equipment resumes the priority of the frequency on which the MBMS is transmitted to a priority allocated by the network side for the frequency and performs a subsequent cell reselection procedure under the existing reselection rule.

Preferably, before the user equipment in the idle state obtains the information about the MBMS being transmitted, the user equipment can firstly judge whether MBMS data currently needs to be received, and if so, then the user equipment obtains the information about the MBMS being transmitted; otherwise, the user equipment does not obtain the information. Here the user equipment can particularly interact with an application layer of the user equipment to determine whether the user equipment currently needs to receive the MBMS data.

The invention will be described below in connection with particular embodiments:

The basic content of the invention includes: a UE in idle state sets an MBMS frequency at the highest priority (higher than all of allocated priorities of frequencies) and then performs a cell reselection procedure after obtaining ongoing information about an MBMS service.

Particular implementations are as follows:

In a first implementation, after obtaining the ongoing information about the MBMS service, the UE in the idle state reselects a cell at the MBMS frequency directly without regard to the priority of a frequency of a cell where the UE currently camps, and then sets the MBMS frequency at the highest priority (higher than priorities of all the existing frequencies) and performs the cell reselection.

In a second implementation, after obtaining the ongoing information about the MBMS service, the UE in the idle state sets the MBMS frequency directly at the highest priority (higher than priorities of all the existing frequencies) and then performs the cell reselection.

### First Embodiment

Corresponding to the first implementation, currently an MBMS is transmitted only at a frequency f1 over a network, and a UE is in the idle state and camps on a frequency f2 (or another frequency than f1). Priorities of frequencies are allocated by the network so that the priority of f1 is 0, the priority of f2 is 4, and the priority of f3 is 7, where 0 represents the lowest priority and 7 represents the highest priority. A particular flow is as follows:

Step 1: The UE obtains somehow information about the MBMS being transmitted on the frequency f1, and the UE judges whether the MBMS being transmitted at f1 includes an MBMS service interested to receive by the UE, and if the MBMS being transmitted at f1 includes an MBMS service interested to receive by the UE, then the UE reselects a cell at f1 directly, which needs to satisfy a general cell selection criterion, that is, where the UE can camp normally.

Step 2: After camping on the cell at f1, the UE sets f1 as a frequency with the highest priority without regard to the priority 0 allocated at f1, where the priority of the frequency with the highest priority is higher than the priorities of all the currently existing frequencies, that is, higher than the priority 7 of f3; and also the UE starts to receive MBMS data interested to receive by itself and continues performing the normal cell reselection.

Step 3: The UE leaves from the frequency f1 when receiving the MBMS data in a subsequent reselection procedure, that is, the UE reselects a cell at another frequency than f1, and currently the UE still needs to continue receiving the MBMS data (that is, the UE is still interested to receive the MBMS service at f1), and then the UE still keeps the priority of f1 as the highest priority (higher than the priorities of all the currently existing frequencies) and continues performing the cell reselection.

### Second Embodiment

Corresponding to the first implementation, currently an MBMS is transmitted only at a frequency f1 over a network, and a UE is in the idle state and camps on a frequency f2 (or another frequency than f1). Priorities of frequencies are allocated by the network so that the priority of f1 is 0, the priority of f2 is 4, and the priority of f3 is 7, where 0 represents the lowest priority and 7 represents the highest priority. A particular flow is as follows:

Step 1: The UE obtains somehow information about the MBMS being transmitted on the frequency f1, and the UE judges whether the MBMS being transmitted at f1 includes an MBMS service interested to receive by the UE, and if the MBMS being transmitted at f1 includes an MBMS service interested to receive by the UE, then the UE reselects a cell at f1 directly, which needs to satisfy a general cell selection criterion, that is, where the UE can camp normally.

Step 2: After camping on the cell at f1, the UE sets f1 as a frequency with the highest priority without regard to the priority 0 allocated at f1, where the priority of the frequency with the highest priority is higher than the priorities of all the currently existing frequencies, that is, higher than the priority 7 of f3; and also the UE starts to receive MBMS data interested to receive by itself and continues performing the normal cell reselection.

Step 3: The MBMS data received by the UE is stopped from being transmitted or the UE does not need to continue receiving the MBMS data (that is, the UE is not interested to receive the MBMS service any longer) when the UE camps on the cell at f1, and then the UE does not consider f1 any longer as the frequency with the highest priority, but resumes the priority of f1 to the priority allocated by the network side for this frequency (e.g., the priority allocated for f1 is 0) and performs a subsequent cell reselection procedure.

### Third Embodiment

Corresponding to the second implementation, currently an MBMS is transmitted only at a frequency f1 over a network, and a UE is in the idle state and camps on a frequency f2 (or another frequency than f1). Priorities of frequencies are allocated by the network so that the priority of f1 is 0, the priority of f2 is 4, and the priority of f3 is 7, where 0 represents the lowest priority and 7 represents the highest priority. A particular flow is as follows:

Step 1: The UE obtains somehow information about the MBMS being transmitted on the frequency f1, and the UE judges whether the MBMS being transmitted at f1 includes an MBMS service interested to receive by the UE, and if the MBMS being transmitted at f1 includes an MBMS service interested to receive by the UE, then the UE directly sets the priority of the frequency f1 (MBMS frequency) as the highest priority without regard to the priority 0 allocated at f1, where the highest priority is higher than the priorities of all the currently existing frequencies, that is, higher than the priority 7 of f3, and performs a subsequent cell reselection procedure.

Step 2: If the UE reselects the frequency f1, then the UE starts to receive MBMS data and also continues keeping the frequency f1 as the frequency with the highest priority and continues performing the normal cell reselection.

Step 3: The UE leaves from the frequency f1 when receiving the MBMS data in a subsequent reselection procedure, that is, the UE reselects a cell at another frequency than f1, and currently the UE still needs to continue receiving the MBMS data (that is, the UE is still interested to receive the MBMS service at f1), and then the UE still keeps the priority of f1 as the highest priority (higher than the priorities of all the currently existing frequencies) and continues performing the cell reselection.

### Fourth Embodiment

Corresponding to the second implementation, currently an MBMS is transmitted only at a frequency f1 over a network, and a UE is in the idle state and camps on a frequency f2 (or another frequency than f1). Priorities of frequencies are allocated by the network so that the priority of f1 is 0, the priority of f2 is 4, and the priority of f3 is 7, where 0 represents the lowest priority and 7 represents the highest priority. A particular flow is as follows:
Step 1: The UE obtains somehow information about the MBMS being transmitted on the frequency f1, and the UE judges whether the MBMS being transmitted at f1 includes an MBMS service interested to receive by the UE, and if the MBMS being transmitted at f1 includes an MBMS service interested to receive by the UE, then the UE directly sets the priority of the frequency f1 (MBMS frequency) as the highest priority without regard to the priority 0 allocated at f1, where the highest priority is higher than the priorities of all the currently existing frequencies, that is, higher than the priority 7 of f3, and performs a subsequent cell reselection procedure.
Step 2: If the UE reselects the frequency f1, then the UE starts to receive MBMS data and also continues keeping the frequency f1 as the frequency with the highest priority and continues performing the normal cell reselection.
Step 3: The MBMS data received by the UE is stopped from being transmitted or the UE does not need to continue receiving the MBMS data (that is, the UE is not interested to receive the MBMS service any longer) when the UE camps on the cell at f1, and then the UE does not consider f1 any longer as the frequency with the highest priority, but resumes the priority of f1 to the priority allocated by the network side for this frequency (e.g., the priority allocated for f1 is 0) and performs a subsequent cell reselection procedure.

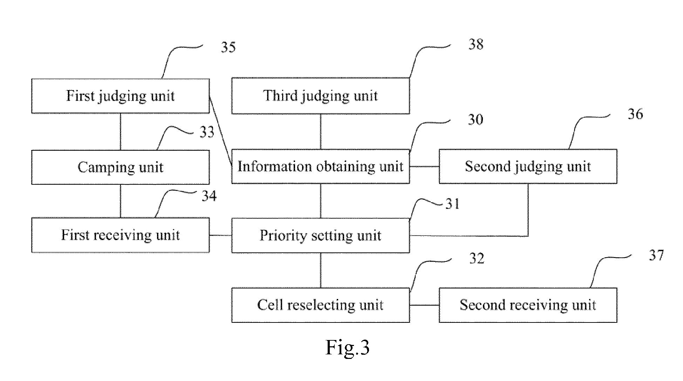

Referring to Fig.3, an embodiment of the invention provides a user equipment which includes:

An information obtaining unit 30 configured to obtain information about an Multimedia Broadcast Multicast Service, MBMS, being transmitted in idle state;

A priority setting unit 31 configured to set a priority of a frequency on which the MBMS is transmitted as the highest priority; and

A cell reselecting unit 32 configured to perform cell reselection according to the set priority of the frequency.

The user equipment further includes:

A camping unit 33 configured to camp on a cell at the frequency on which the MBMS is transmitted after the information about the MBMS being transmitted is obtained and before the priority of the frequency on which the MBMS is transmitted is set as the highest priority.

The user equipment further includes:

A first receiving unit 34 configured to receive MBMS data in the cell at the frequency on which the MBMS is transmitted after the cell at the frequency on which the MBMS is transmitted is camped on and before the cell reselection is performed according to the set priority of the frequency.

The user equipment further includes:

A first judging unit 35 configured to judge whether the MBMS being transmitted includes an MBMS service interested to receive by itself after the information about the MBMS being transmitted is obtained and before the cell at the frequency on which the MBMS is transmitted is camped on; and

The camping unit 33 is configured:

To camp on the cell at the frequency on which the MBMS is transmitted when it is determined that the MBMS being transmitted includes the MBMS service interested to receive by itself.

The user equipment further includes:

A second judging unit 36 configured to judge whether the MBMS being transmitted includes an MBMS service interested to receive by itself after the information about the MBMS being transmitted is obtained and before the priority of the frequency on which the MBMS is transmitted is set as the highest priority; and

The priority setting unit 31 is configured:

To set the priority of the frequency on which the MBMS is transmitted as the highest priority when it is determined that the MBMS being transmitted includes the MBMS service interested to receive by itself.

The user equipment further includes:

A second receiving unit 37 configured to receive MBMS data in a cell at the frequency on which the MBMS is transmitted if the cell at the frequency on which the MBMS is transmitted is reselected after the cell reselection is performed according to the set priority of the frequency.

The priority setting unit 31 is further configured:

To keep the priority of the frequency on which the MBMS is transmitted as the highest priority if a cell at another frequency than the frequency on which the MBMS is transmitted is reselected in a subsequent cell reselection procedure and currently the user equipment still needs to continue receiving the MBMS data; or

To resume the priority of the frequency on which the MBMS is transmitted to a priority allocated by a network side for the frequency if transmission of the MBMS is terminated or the user equipment does not need to continue receiving the MBMS data.

The user equipment further includes:

A third judging unit 38 configured to judge whether MBMS data currently needs to be received before the information about the MBMS being transmitted is obtained; and

The information obtaining unit 30 is configured:

To obtain the information about the MBMS being transmitted after it is determined that the MBMS data currently needs to be received.

In summary, the invention has the following advantageous effects:

In the solution according to the embodiments of the invention, the user equipment in the idle state sets the priority of the frequency on which the MBMS is transmitted as the highest priority and performs the cell reselection according to the set priority of the frequency after obtaining the information about the MBMS being transmitted. Apparently, the invention can increase the probability that the user equipment reselects a cell at the frequency on which the MBMS is transmitted in the cell reselection procedure by setting the priority of the frequency on which the MBMS is transmitted as the highest priority, so that the user equipment can receive the MBMS data in the cell, thereby improving the continuity of receiving the MBMS data by the UE and enhancing user experience.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore, the invention can be embodied in the form of a computer program product embodied in one or more computer useable storage mediums (including but not limited to a disk memory, a CD-ROM, an optical memory, etc.) in which computer useable program codes are contained.

The invention has been described with reference to flow charts and/or block diagrams of the method, the device (system) and the computer program product according to the embodiments of the invention. It shall be appreciated that respective flows and/or blocks in the flow charts and/or the block diagrams and combinations of the flows and/or the blocks in the flow charts and/or the block diagrams can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow charts and/or the block(s) of the block diagrams.

These computer program instructions can also be stored into a computer readable memory capable of directing the computer or the other programmable data processing device to operate in a specific manner so that the instructions stored in the computer readable memory create manufactures including instruction means which perform the functions specified in the flow(s) of the flow charts and/or the block(s) of the block diagrams.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow charts and/or the block(s) of the block diagrams.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the spirit and scope of the invention. Thus the invention is also intended to encompass these modifications and variations thereto so long as these modifications and variations come into the scope of the claims appended to the invention and their equivalents.

## Claims

1. A cell reselection method, comprising:
obtaining, by a user equipment in idle state, information about a Multimedia Broadcast Multicast Service, MBMS, being transmitted;
setting, by the user equipment, a priority of a frequency on which the MBMS is transmitted as the highest priority; and
performing, by the user equipment, cell reselection according to the set priority of the frequency.

2. The method according to claim 1, wherein after the user equipment in the idle state obtains the information about the MBMS being transmitted and before the user equipment sets the priority of the frequency on which the MBMS is transmitted as the highest priority, the method further comprises:
camping, by the user equipment, on a cell at the frequency on which the MBMS is transmitted.

3. The method according to claim 2, wherein after the user equipment camps on the cell at the frequency on which the MBMS is transmitted and before the user equipment performs the cell reselection according to the set priority of the frequency, the method further comprises:
receiving, by the user equipment, MBMS data in the cell at the frequency on which the MBMS is transmitted.

4. The method according to claim 2, wherein after the user equipment in the idle state obtains the information about the MBMS being transmitted and before the user equipment camps on the cell at the frequency on which the MBMS is transmitted, the method further comprises:
judging, by the user equipment, whether the MBMS being transmitted includes an MBMS service interested to receive by itself; and
camping, by the user equipment, on the cell at the frequency on which the MBMS is transmitted comprises:
camping, by the user equipment, on the cell at the frequency on which the MBMS is transmitted when determining that the MBMS being transmitted includes an MBMS service interested to receive by itself.

5. The method according to claim 1, wherein after the user equipment in the idle state obtains the information about the MBMS being transmitted and before the user equipment sets the priority of the frequency on which the MBMS is transmitted as the highest priority, the method further comprises:
judging, by the user equipment, whether the MBMS being transmitted includes an MBMS service interested to receive by itself; and
setting the priority of the frequency on which the MBMS is transmitted as the highest priority comprises:
setting, by the user equipment, the priority of the frequency on which the MBMS is transmitted as the highest priority when determining that the MBMS being transmitted includes an MBMS service interested to receive by itself.

6. The method according to claim 5, wherein after the user equipment performs the cell reselection according to the set priority of the frequency, the method further comprises:
if the user equipment reselects a cell at the frequency on which the MBMS is transmitted, then receiving MBMS data in the cell at the frequency on which the MBMS is transmitted.

7. The method according to claim 3 or 6, further comprising:
if the user equipment reselects a cell at another frequency than the frequency on which the MBMS is transmitted in a subsequent cell reselection procedure and currently the user equipment still needs to continue receiving the MBMS data, then keeping, by the user equipment, the priority of the frequency on which the MBMS is transmitted as the highest priority, and performing a subsequent cell reselection procedure; or
if transmission of the MBMS is terminated or the user equipment does not need to continue receiving the MBMS data, then resuming, by the user equipment, the priority of the frequency on which the MBMS is transmitted to a priority allocated by the network for the frequency, and performing a subsequent cell reselection procedure.

8. The method according to any one of claims 1 to 6, wherein before the user equipment in the idle state obtains the information about the MBMS being transmitted, the method further comprises:
judging, by the user equipment, whether MBMS data currently needs to be received; and
obtaining, by the user equipment, the information about the MBMS being transmitted comprises:
obtaining, by the user equipment, the information about the MBMS being transmitted after determining that the MBMS data currently needs to be received.

9. A user equipment, comprising:
an information obtaining unit configured to obtain information about an Multimedia Broadcast Multicast Service, MBMS, being transmitted in idle state;
a priority setting unit configured to set a priority of a frequency on which the MBMS is transmitted as the highest priority; and
a cell reselecting unit configured to perform cell reselection according to the set priority of the frequency.

10. The user equipment according to claim 9, further comprising:
a camping unit configured to camp on a cell at the frequency on which the MBMS is transmitted after the information about the MBMS being transmitted is obtained and before the priority of the frequency on which the MBMS is transmitted is set as the highest priority.

11. The user equipment according to claim 10, further comprising:
a first receiving unit configured to receive MBMS data in the cell at the frequency on which the MBMS is transmitted after the cell at the frequency on which the MBMS is transmitted is camped on and before the cell reselection is performed according to the set priority of the frequency.

12. The user equipment according to claim 10, further comprising:
a first judging unit configured to judge whether the MBMS being transmitted includes an MBMS service interested to receive by itself after the information about the MBMS being transmitted is obtained and before the cell at the frequency on which the MBMS is transmitted is camped on; and
the camping unit is configured:
to camp on the cell at the frequency on which the MBMS is transmitted when it is determined that the MBMS being transmitted includes an MBMS service interested to receive by itself.

13. The user equipment according to claim 9, further comprising:
a second judging unit configured to judge whether the MBMS being transmitted includes an MBMS service interested to receive by itself after the information about the MBMS being transmitted is obtained and before the priority of the frequency on which the MBMS is transmitted is set as the highest priority; and
the priority setting unit is configured:
to set the priority of the frequency on which the MBMS is transmitted as the highest priority when it is determined that the MBMS being transmitted includes an MBMS service interested to receive by itself.

14. The user equipment according to claim 13, further comprising:
a second receiving unit configured to receive MBMS data in a cell at the frequency on which the MBMS is transmitted if the cell at the frequency on which the MBMS is transmitted is reselected after the cell reselection is performed according to the set priority of the frequency.

15. The user equipment according to claim 11 or 14, wherein the priority setting unit is further configured:
to keep the priority of the frequency on which the MBMS is transmitted as the highest priority if a cell at another frequency than the frequency on which the MBMS is transmitted is reselected in a subsequent cell reselection procedure and currently the user equipment still needs to continue receiving the MBMS data; or
to resume the priority of the frequency on which the MBMS is transmitted to a priority allocated by the network for the frequency if transmission of the MBMS is terminated or the user equipment does not need to continue receiving the MBMS data.

16. The user equipment according to any one of claims 9 to 14, further comprising:
a third judging unit configured to judge whether MBMS data currently needs to be received before the information about the MBMS being transmitted is obtained; and
the information obtaining unit is configured:
to obtain the information about the MBMS being transmitted after it is determined that the MBMS data currently needs to be received.
